# EUROPÄISCHE PATENTSCHRIFT

(11) **EP 2 632 777 B1**
(45) Veröffentlichungstag und Bekanntmachung des Hinweises auf die Patenterteilung: **20.04.2016**
(21) Anmeldenummer: 11776340.9
(22) Anmeldetag: 15.09.2011
(51) Int. Cl.: B60R 21/264, C06D 5/06

(54) **TREIBSTOFFTABLETTE UND TREIBSATZ FÜR EINEN GASGENERATOR**
PELLET AND PYROTECHNIC PROPELLANT FOR A GAS GENERAOR
GRANULE ET CHARGE PYROTECHNIQUE POUR GENERATEUR DE GAZ

(30) Priorität: 29.10.2010 DE 102010049765
(43) Veröffentlichungstag der Anmeldung: 04.09.2013
(60) Teilanmeldung: 16000481.8
(73) Patentinhaber: TRW Airbag Systems GmbH, 84544 Aschau am Inn (DE)
(72) Erfinder: BERNAU, Klaus, 83564 Soyen (DE); REICHGRUBER, Sebastian, 84549 Englsberg (DE); NIEHAUS, Michael, 76297 Stutensee (DE); ZEUNER, Siegfried, 81369 München (DE); HERLER, Sebastian, 81667 München (DE); BICHLMAIER, Christian, 84573 Schönberg (DE); NOBACH, Thomas, 84478 Waldkraiburg (DE)
(74) Vertreter: Mehnert, Bernhard
(86) Internationale Anmeldenummer: PCT/EP2011/004625
(87) Internationale Veröffentlichungsnummer: WO 2012/055460

(56) Entgegenhaltungen:
- WO-A2-2006/004647
- DE-A1- 10 058 934
- US-A- 5 562 303

## Beschreibung

Die Erfindung betrifft eine Treibstofftablette für pyrotechnische Sicherheitseinrichtungen in Fahrzeugen, wie Gassackmodule, Gurtstraffer, Mikrogasgeneratoren, Aktuatoren und Anzünder, sowie einen Treibsatz, einen Anzünder und einen Gasgenerator, welche jeweils eine Mehrzahl solcher Treibstofftabletten enthalten.

Aus der WO 01/19760 A2 ist bekannt, die Abbranddauer von Gasgeneratortreibstoffen über die Kornform und -größe der Gasgeneratortreibsätze zu steuern. Für Verstärkerladungen und Gasgeneratortreibsätze, die eine kurze Abbranddauer benötigen, wird üblicherweise ein Treibstoffgranulat verwendet.

Die Herstellung von Treibstoffgranulaten ist beispielsweise aus der DE 100 20 291 A1 bekannt. Nachteilig an der Verwendung von Treibstoffgranulaten sind generell die relativ hohen Herstellkosten aufgrund der aufwändigen Verfahrensschritte. Die Herstellung von Granulaten kann nach verschiedenen Verfahren erfolgen wie z. B. Brechen von Preßkörpern, Extrudieren oder Pressen von feuchten Massen, Aufbauagglomeration oder Sprühgranulation. Hierbei kann prinzipiell zwischen Trocken- oder Nassverfahren unterschieden werden.

Die WO 2006004647 offenbart eine Treibstofftablette gemäß dem Oberbegriff des Anspruchs 1.

Bei den Trockenverfahren werden bereits hergestellte Presskörper (z. B. Tabletten) erneut gebrochen und die erhaltenen Bruchstücke entsprechend der gewünschten Granulatgröße ausgesiebt. So hergestellte Granulate weisen üblicherweise eine inhomogene und unregelmäßige Kornform auf. Insbesondere sind solche Granulate wenig abriebfest, da die Kanten, Ecken und Spitzen bei mechanischer Belastung leicht abgebrochen werden.

Durch Nassverfahren hergestellte Granulate besitzen grundsätzlich den Nachteil der Verwendung von Lösemitteln sowie von Bindemitteln. Erstere müssen in zusätzlichen Verfahrensschritten aufwändig wieder entfernt werden, letztere sind unerwünschte Rezepturbestandteile, die sich negativ auf den Abbrand (z. B. die Gaszusammensetzung) des Treibmittels auswirken.

Treibstoffgranulate weisen ferner eine Verteilung von Körnern mit unterschiedlicher Korngröße und Kornoberfläche auf. Daher kann es schon beim Transport von Treibstoffgranulat zu einer Entmischung der größeren Körner von kleineren Granulatkörnern kommen. Auch bei der Befüllung von Gasgeneratoren mit Treibstoffgranulat kann eine solche Entmischung und somit eine Streuung der Gasgeneratorleistung auftreten, da die größeren Granulatkörner schneller rieseln als kleine Körner. Eine Entmischung des Treibstoffgranulats kann schließlich auch im eingebauten Zustand des Gasgenerators über die Betriebsdauer des Fahrzeugs auftreten, so dass die Gasgeneratorleistung über die Zeit variieren kann.

Die Einstellung der ballistischen Eigenschaften eines durch Brechen größerer Presskörper hergestellten Treibstoffgranulats ist außerdem nur bedingt möglich, da die zum Granulat führenden Bruchprozesse nicht genau definiert sind. Auch durch Absieben lässt sich die Kornoberfläche und damit das ballistische Verhalten nur sehr aufwändig einstellen, da die Granulatkörner in der Regel eine unregelmäßige Form aufweisen. Somit ist es vorstellbar, dass Beschussergebnisse von einzelnen Gasgeneratoren auch innerhalb einer Herstellungscharge dementsprechend breit streuen. Des weiteren sind derart hergestellte Granulate aufgrund der sehr unrunden Geometrie sehr empfindlich gegenüber mechanischer Belastung und weisen daher eine geringe Abriebfestigkeit auf. Daher verändern sich die ballistischen Eigenschaften sehr stark bei Belastungen, wie sie beispielsweise beim Transport auftreten.

Die durch eine sogenannte Aufbauagglomeration beispielsweise in einem Wirbelschichtgenerator hergestellten Granulatkörner sind zwar runder und dadurch besser zu sieben. Diese Treibstoffgranulate weisen jedoch nur eine geringe Dichte und damit eine geringere Volumen-bezogene Gasausbeute als gepresste Granulate auf.

Schließlich können die Korngrößen bei der Granulatherstellung nicht gezielt eingestellt werden. Vielmehr müssen die gewünschten Fraktionen ausgesiebt werden. Daher fällt bei der Granulatherstellung immer ein höherer Anteil an Ausschuss an. Auch die Befüllung der Gasgeneratoren mit Treibstoffgranulat ist aufwendig und erfordert lange Taktzeiten, da die Rieselfähigkeit von Granulat eher schlecht ist.

Die Herstellung von Treibstoffkörpern mit zylindrischer Grundform kann durch Extrudieren geeigneter Massen im Nassprozess und Schneiden des extrudierten Treibstoffstrangs erfolgen. Auf diese Weise können Treibstoffkörper mit einem Durchmesser von 1 mm bis etwa 5 mm erhalten werden. Der zur Herstellung der extrudierten Treibstoffkörper notwendige Zusatz eines Binders kann sich nachteilig auf die ballistischen Eigenschaften der Treibstoffzusammensetzung auswirken.

Wird das noch weiche Extrudat geschnitten, so ergeben sich immer Ausfransungen der Schnittflächen, die vor allem bei kleinen Durchmessern stärke und nicht steuerbare Auswirkungen auf die ballistischen Eigenschaften der so hergestellten Treibstoffpellets haben. Wird das Extrudat erst getrocknet und dann geschnitten, werden die Treibstoffkörper aufgrund der beim Schneiden auftretenden starken Scherkräfte vorgeschädigt. Dabei kommt es zu Mikrorissen oder zu Ausbrüchen des Treibstoffes. In einigen Fällen kann es aufgrund der Treibstoffspezifikationen erforderlich sein, das Extrudat auf eine Höhe im Bereich von 0,4 mm bis 1 mm zu schneiden. Solche Abmessungen sind mit einem extrudierten Treibstoffstrang kaum reproduzierbar herzustellen. In diesen Fällen sind daher die ballistischen Eigenschaften des Treibstoffs entweder nicht mehr zu steuern oder aber nur mit einer großen Streuung in den Druck/Zeit-Kurven zu erreichen.

Der vorliegenden Erfindung liegt die Aufgabe zugrunde, eine Treibstofftablette für pyrotechnische Anwendungen in Sicherheitssystemen für Fahrzeuge zu schaffen, die kostengünstig und sicher herstellbar ist und eine reproduzierbare Steuerung des Abbrandverhaltens ermöglicht. Weiterhin liegt der Erfindung die Aufgabe zu Grunde, einen Treibsatz, einen Anzünder, einen Aktuator und einen Gasgenerator bzw. Aktuator mit einer Anzahl derartiger Treibstofftabletten bereitzustellen.

Zur Lösung dieser Aufgaben wird bezüglich der Treibstofftablette erfindungsgemäß eine Treibstofftablette gemäß Anspruch 1 bereitgestellt. Weiterhin werden bereitgestellt, bezüglich des Treibsatzes, ein erfindungsgemäßer Treibsatz gemäß Anspruch 8, bezüglich des Anzünders, ein erfindungsgemäßer Anzünder gemäß Anspruch 9, bezüglich des Gasgenerators bzw. des Aktuators, ein erfindungsgemäßer Gasgenerator bzw. Aktuator gemäß Anspruch 10.

Gegenstand der Erfindung ist ferner die Verwendung der erfindungsgemäßen Treibstofftabletten in Sicherheitseinrichtungen von Fahrzeugen, wie einem Gassackmodul, einem Gurtstraffer, einem Mikrogasgenerator, einer Frühzündeinrichtung und einem pyrotechnischen Anzünder.

Vorteilhafte Ausführungsformen der Erfindung sind in den Unteransprüchen angegeben.

Die Herstellung von Treibstofftabletten durch Verpressen von Treibstoffpulvern ist beispielsweise aus der oben genannten WO 01/19760 A2 und der DE 100 58 934 A1 bekannt. Allerdings werden in Anwendungen für Rückhaltemittel in Fahrzeugen üblicherweise nur Treibstofftabletten mit einem relativ großen Durchmesser eingesetzt.

Erfindungsgemäß wird jedoch eine im Wesentlichen zylindrische Treibstofftablette zur Verwendung in einer Sicherheitseinrichtung für Fahrzeuge bereitgestellt, die durch trockenes Verpressen einer pulverförmigen Treibstoffzusammensetzung erhältlich ist und einen Durchmesser von höchstens 2 mm hat, wobei die Treibstöfftabtette eine relative Schüttdichte von mindestens 0,5, vorzugsweise 0,5 bis 0,7 aufweist.

Als relative Schüttdichte wird das Verhältnis von Schüttdichte, bestimmt als Masse der Treibstofftabletten bezogen auf das Schüttvolumen, zur maximalen theoretischen Dichte der Treibstoffzusammensetzung definiert. Hierbei bezieht sich die Schüttdichte auf Werte, die in einem 100 ml Messzylinder mit einem Durchmesser von 30 mm ermittelt werden. Die Messung erfolgt durch Einfüllen der Tabletten zur Fülllinie und anschließendes Wiegen, ohne Rütteln, Schlagen oder sonstiges Verdichten der Schüttung. Die maximale theoretische Dichte (tmd) wird aus den Kristalldichten der jeweiligen Bestandteile der Zusammensetzung ermittelt. Aufgrund der Bezugnahme auf die maximale theoretische Dichte ist der Betrag der relativen Schüttdichte unabhängig von der jeweiligen Treibstoffzusammensetzung und wird im wesentlichen durch die Geometrie des Treibstoffkörpers bestimmt.

Besonders bevorzugt liegt die relative Schüttdichte im Bereich von 0,54 bis 0,6, vorzugsweise im Bereich von 0,56 bis 0,59.

Die erfindungsgemäße Treibstofftablette weist einen Durchmesser von höchstens 2 mm auf. Vorzugsweise liegt der Durchmesser im Bereich von 0,8 mm bis 2 mm, weiter vorzugsweise im Bereich von 1 mm bis 2 mm und besonders bevorzugt im Bereich von 1,5 mm bis 2 mm.

Das Verhältnis von Höhe zu Durchmesser (h/d) der erfindungsgemäßen Treibstofftabletten liegt vorzugsweise im Bereich von 0,2 bis 0,8.

Die Abmessungen (Durchmesser x Höhe) der erfindungsgemäßen Treibstofftabletten liegen bevorzugt in einem Bereich von 1 mm x 0,4 mm bis 2 mm x 1,5 mm, wobei das Verhältnis von Höhe zu Durchmesser höchstens 0,8 beträgt.

In diesen Bereichen können die Treibstofftabletten mit gut reproduzierbaren ballistischen Eigenschaften kostengünstig hergestellt werden. Ganz besonders bevorzugt sind Treibstofftabletten mit Abmessungen im Bereich von 1,5 mm x 0,4-0,9 mm und 2 mm x 0,4-1,5 mm.

Als Treibstoffe können alle im Stand der Technik für pyrotechnische Rückhaltemittel bekannten Treibstoffe verwendet werden, wie sie beispielsweise in der WO 01/19760 A2 beschrieben sind.

Die Erfindung umfasst auch einen Treibsatz und einen Anzünder, welche jeweils eine Mehrzahl von oben beschriebenen, erfindungsgemäßen Treibstofftabletten enthalten.

Die erfindungsgemäßen Treibstofftabletten lassen sich vorteilhaft als Ersatz für herkömmliche Treibstoffgranulate, insbesondere für Verstärkerladungen in pyrotechnischen Gasgeneratoren und als Treibsätze mit kurzer Abbranddauer beispielsweise in Mikrogasgeneratoren verwenden. Weiterhin können die erfindungsgemäßen Treibstofftabletten in Anzündern in einer Sicherheitseinrichtung verwendet werden, wie beispielsweise in einem pyrotechnischen Gasgenerator zum Aufblasen eines Luftsackes zum Schutz eines Fahrzeuginsassen bei einem Fahrzeugunfall. Ebenso können die erfindungsgemäßen Treibstofftabletten in einem Aktuator beinhaltet sein, welcher bei einem Unfall die Motorhaube eines Fahrzeugs aufstellt, um eine optimierte Knautschzone für einen Aufprall eines Fußgängers zu schaffen.

Nach aufwändigen Versuchen war die Anmelderin schließlich erfolgreich die Fertigungskosten der erfindungsgemäßen Treibstofftabletten erheblich unter die Kosten der bekannten Granulatherstellung zu senken, unter anderem, da auf die aufwändigen Sieb- und Klassifizierungsprozesse bzw. den zusätzlichen Trockenschritt bei feucht hergestellten Granulaten verzichtet werden kann. Außerdem ist auch die Arbeitssicherheit erhöht, da bei der Tablettenherstellung keine Bruchprozesse durchgeführt werden müssen und kein hochentzündlicher Feinstaub anfällt.

Die erfindungsgemäßen Treibstofftabletten weisen eine reproduzierbare Geometrie und somit ein gut reproduzierbares Abbrandverhalten auf. Daher lassen sich die erfindungsgemäßen Tabletten beispielsweise durch eine Variation von Höhe und/oder Durchmesser einfach und kostengünstig an die gewünschten Leistungsanforderungen und Kundenspezifikationen für Gasgeneratoren anpassen. Selbst im Vergleich zu den aus Presskörpern hergestellten Granulaten ist die Schüttdichte der erfindungsgemäßen Treibstofftabletten höher. Bei gleichem Treibstoffgewicht können somit kleinere Brennkammervolumina verwendet werden. Beispielsweise wurde bei Tabletten mit einem Durchmesser von 1,0 mm und einer Höhe von 0,5 mm, hergestellt aus einer Mischung aus 60,8 Gew.-% Guanidinnitrat, 36,7 Gew.-% Kaliumperchlorat und 2,5 Gew.-% Additiven, ein Schüttgewicht von 1,01 g/cm³ gemessen, während ein aus vorher verpressten Tabletten der selben Zusammensetzung, die anschließend gebrochen und zu einem Granulat mit einer Kornverteilung zwischen 0,5 mm - 1,2 mm ausgesiebt wurden, lediglich ein Schüttgewicht von 0,87 g/cm³ erhalten wurde. Dies entspricht einer Erhöhung des Schüttgewichts von ca. 16 %.

Die Beschussversuche mit den erfindungsgemäßen Treibstofftabletten ergeben eine relativ enge Streuung, da die Korngrößenverteilung im Treibsatz mit verpressten Tabletten von definierter Korngröße gegenüber den unregelmäßigen Granulatkörnern in engen Grenzen eingestellt und besser reproduziert werden kann. Somit können die ballistischen Eigenschaften der Treibsätze auch über eine Variation der Korngrößenverteilung durch Verwendung von Tabletten verschiedener Größe variabel und reproduzierbar eingestellt werden.

Versuche haben ergeben , dass die Generatorleistung bei Verwendung der erfindungsgemäßen Treibstofftabletten über die Betriebsdauer des Generators (> 15 Jahre) stabil bleibt, da sich die Tabletten durch Vibrationen nicht entmischen oder unregelmäßig verkleinern und somit die Oberfläche vergrößern. Die Abbrandcharakteristik ändert sich daher nicht. Auch beim Transport der erfindungsgemäßen Treibstofftabletten zu anderen Standorten der Generatorfertigung tritt keine Entmischung und damit keine nachteilige Veränderung der Schüttgutzusammensetzung auf.

Schließlich lassen sich die erfindungsgemäßen Treibstofftabletten wegen des besseren Rieselverhaltens leichter und in einer kürzeren Taktzeit in den Generator dosieren. Die Befüllung des Gasgenerators mit den erfindungsgemäßen Treibstofftabletten erfolgt wesentlich homogener als mit Granulat, da auch während der Dosierung keine Entmischung auftritt, so dass besser reproduzierbare Beschussergebnisse erhalten werden. Zudem wird das Entstehen von Feinstaub vermieden, da die eingestetzten Mintabletten wesentlich reibfester sind als das bisher eingesetzte Granulat.

Im Vergleich zu extrudierten Treibstoffkörpern weisen die erfindungsgemäßen Treibstofftabletten bei gleicher Zusammensetzung ebenfalls eine höhere Dichte auf. Daher liegt auch die Schüttdichte der erfindungsgemäßen Treibstofftabletten bei gleichen Abmessungen und damit gleicher Packungsdichte, d.h. Teilchen pro Volumeneinheit, höher als die Schüttdichte der durch Extrudieren hergestellten Treibstoffkörper.

Beispielsweise wird für einen feucht extrudierten Körper mit einer Geometrie von 3,9 x 4 mm aus 45 Gew.-% Guanidinnitrat, 50 Gew.-% basischem Kupfernitrat und 5 Gew.-% Guarmehl experimentell eine Dichte des Treibstoffkörpers von 1,7 g/cm³ gefunden. Die Dichte des extrudierten Treibstoffkörpers erreicht also nur 84 % der maximalen theoretischen Dichte (tmd) von 2,03 g/cm³. Die Dichte von trocken verpressten Treibstofftabletten mit der gleichen Treibstoffzusammensetzung erreicht dagegen im Regelfall bis zu 99 % der maximalen theoretischen Dichte. Für die oben genannte Zusammensetzung kann also mit trocken verpressten Treibstofftabletten eine im Vergleich zu den extrudierten Körpern um 18,3 % höhere Schüttdichte erzielt werden. Dies gestattet eine Verkleinerung der Brennkammer in der gleichen Größenordung.

Weitere Merkmale und Vorteile der Erfindung ergeben sich aus der folgenden Beschreibung bevorzugter Ausführungsformen unter Bezugnahme auf die beigefügten Zeichnungen, die jedoch nicht in einem einschränkenden Sinn verstanden werden sollen. In den Zeichnungen zeigen:
- Figur 1 die schematische Darstellung eines Gasgenerators;
- Figur 2 ein Diagramm mit einer Darstellung der relativen Schüttdichte der erfindungsgemäßen Tabletten gegen den Tablettendurchmesser; und
- Figur 3 die Darstellung von Druck/Zeit-Kurven eines definierten Treibstoffs für verschiedene Tablettengrößen.

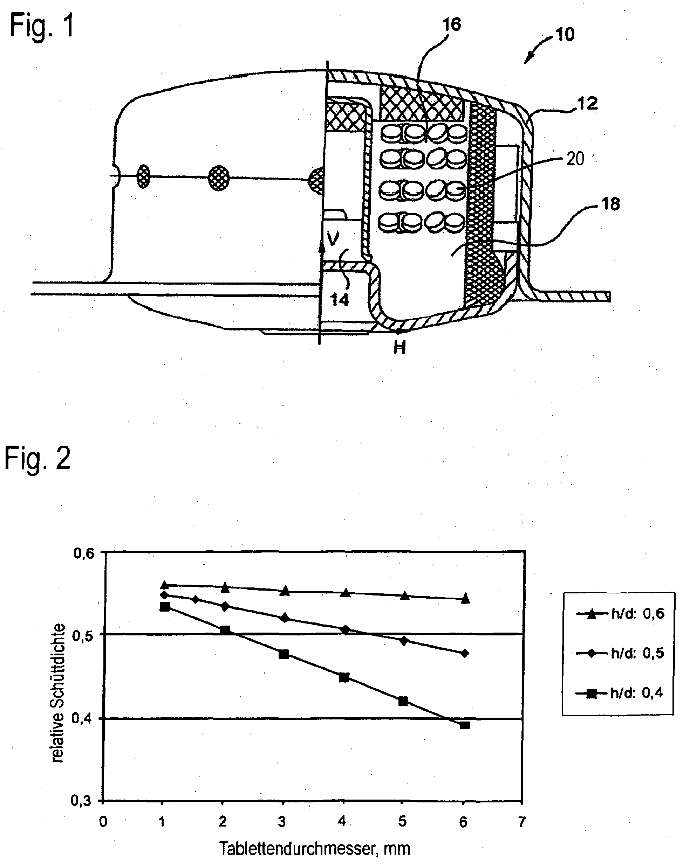

Die Komponenten des in Figur 1 gezeigten Gasgenerators 10 sind an sich bekannt. Der Gasgenerator 10 weist ein Außengehäuse 12 auf, in das ein Anzünder 14 eingesetzt ist. Im Falle eines Unfalls wird der Anzünder aktiviert und entzündet einen Treibsatz 16, der in einer dem Anzünder 14 zugeordneten Brennkammer 18 aufgenommen ist.

Erfindungsgemäß liegt der in der Brennkammer angeordnete Treibsatz 16 in Form einer Schüttung mit den erfindungsgemäßen Treibstofftabletten 20 vor, die in Figur 1 nur schematisch, nicht maßstabsgetreu, dargestellt sind.

Die Schüttung kann die erfindungsgemäßen Treibstofftabletten wenigstens teilweise, vorzugsweise in einem Anteil von mindestens 10 Gew.-%, weiter vorzugsweise zu mindestens 30 Gew.-%, mindestens 50 Gew.-% oder mindestens 70 Gew.-% enthalten, und besonders bevorzugt vollständig aus den erfindungsgemäßen Treibstofftabletten bestehen.

Besonders bevorzugt liegen die erfindungsgemäßen Treibstofftabletten in der Schüttung in monomodaler Verteilung vor.

Die erfindungsgemäßen Treibstofftabletten haben eine im Wesentlichen zylindrische Form und sind durch trockenes Verpressen einer pulverförmigen Treibstoffzusammensetzung erhältlich. Die Tabletten weisen einen Durchmesser von höchstens 2 mm auf.

Die Dichte der trocken verpressten Treibstofftabletten beträgt vorzugsweise mindestens 95 % der maximalen theoretischen Dichte (tmd), weiter bevorzugt mindestens 97 % und besonders bevorzugt zwischen 97 % und 99 % der maximalen theoretischen Dichte.

Die relative Schüttdichte der erfindungsgemäßen Treibstofftabletten beträgt mindestens 0,5, vorzugsweise 0,5 bis 0,7, und weiter bevorzugt von 0,54 bis 0,6. Besonders bevorzugt liegt die relative Schüttdichte im Bereich von 0,56 bis 0,59.

Gemäß einer weiteren bevorzugten Ausführungsform weisen die erfindungsgemäßen Treibstofftabletten einen Durchmesser (d) von 0,8 mm bis 2 mm auf. Vorzugsweise liegt der Durchmesser im Bereich von 1 mm bis 2 mm und besonders bevorzugt im Bereich von 1,5 mm bis 2 mm.

Bevorzugt weisen die erfindungsgemäßen Treibstofftabletten ein Verhältnis von Höhe (h) zu Durchmesser (d) von h/d = 0,2 bis 0,8 auf.

Für einen Fachmann versteht sich, dass die vorgenannten Parameter beliebig miteinander kombiniert werden können.

Gemäß einer besonders bevorzugten Ausführungsform liegen die Abmessungen der erfindungsgemäßen Treibstofftabletten im Bereich von d x h = 1 mm x 0,4 mm bis 2 mm x 1,5 mm, wobei das Verhältnis von Höhe zu Durchmesser (h/d) höchstens 0,8 beträgt. In diesem Bereich können die Treibstofftabletten mit gut reproduzierbaren ballistischen Eigenschaften kostengünstig hergestellt werden. Ganz besonders bevorzugt sind Treibstofftabletten mit Abmessungen im Bereich von d x h = 1,5 mm x 0,4-0,9 mm und 2 mm x 0,4-1,5 mm.

Im Stand der Technik werden häufig zylindrische Treibstofftabletten mit einem Durchmesser von 3 mm bis 8 mm eingesetzt. Das Verhältnis von Höhe zu Durchmesser liegt bei diesen Tabletten fertigungstechnisch bedingt üblicherweise im Bereich von 0,2 bis 0,5.

Figur 2 zeigt ein Diagramm mit einer Darstellung der relativen Schüttdichte gegen den Tablettendurchmesser bei konstantem Verhältnis von Höhe zu Durchmesser (h/d). Die Messungen zeigen, dass Tabletten mit kleinerem Durchmesser (bei gleichem Verhältnis von Höhe zu Durchmesser) eine höhere relative Schüttdichte aufweisen. Weiterhin konnte experimentell gezeigt werden, dass die relative Schüttdichte bei konstantem Tablettendurchmesser höher wird, wenn sich Tablettenhöhe und Tablettendurchmesser aneinander angleichen.

Da die relative Schüttdichte nur abhängig von der Geometrie der Treibstoffkörper ist, gelten die beschriebenen Wechselwirkungen für alle Treibstoffzusammensetzungen.

Aus dem in Figur 2 gezeigten Diagramm ergibt sich unmittelbar, dass durch eine Reduktion des Tablettendurchmessers von beispielsweise 4 mm auf 1,5 mm bei einem Verhältnis h/d von 0,5 eine Änderung der relativen Schüttdichte von etwa 0,51 auf 0,54 erreicht wird. Im Ergebnis kann das Volumen der Brennkammer um etwa 6 Prozent reduziert werden, so dass der Gasgenerator bei gleicher Leistung, gemessen als Masse an Gas pro Zeit, kostengünstiger, leichter und kleiner herzustellen ist.

Die erfindungsgemäßen Tabletten mit einem Durchmesser von beispielsweise 1,5 mm lassen sich auch leichter mit einem größeren Verhältnis von Höhe zu Durchmesser (h/d) pressen. So können beispielsweise Treibstofftabletten mit einem Verhältnis von h/d = 0,7 und einem Durchmesser von d ≤ 2 mm ohne weiteres realisiert werden.

Im Vergleich zu einer herkömmlichen Tablette mit 4x2,2 mm (h/d = 0,55) ergibt sich dann mit einer Tablette von 2x1,6 mm sogar eine Vergrößerung der relativen Schüttdichte um 14 Prozent. Infolgedessen kann auch das Brennkammervolumen des Gasgenerators bei gleicher Leistung um 14 Prozent reduziert werden.

Weitere Beispiele sind in der nachfolgenden Tabelle angegeben, die einen Vergleich der erfindungsgemäßen Treibstofftabletten mit den nach dem Stand der Technik eingesetzten Treibstofftabletten zeigt. Ferner ist die durch die Verwendung der erfindungsgemäßen Treibstofftabletten mögliche Volumenreduktion der Brennkammer angegeben.

**Tabelle 1: Vergleich verschiedener Tablettengeometrien**

| | | | | Volumeneinsparung (%) im Vergleich zu: | | |
|---|---|---|---|---|---|---|
| Durchmesser, mm | Höhe, mm | h/d | Relative. Schüttdichte | 6x2,2 mm | 4x2,2 mm | 3x1,1 mm |
| 3 | 1,1 | 0,37 | 0,48 | 23 | -9 | 0 |
| 4 | 2,2 | 0,55 | 0,53 | 36 | 0 | 10 |
| 6 | 2,2 | 0,37 | 0,39 | 0 | -26 | -19 |
| 2 | 1 | 0,50 | 0,54 | 37 | 2 | 12 |
| 2 | 1,2 | 0,60 | 0,56 | 43 | 5 | 17 |
| 2 | 1,4 | 0,70 | 0,58 | 49 | 10 | 22 |
| 2 | 1,6 | 0,80 | 0,60 | 55 | 14 | 26 |
| 1,5 | 0,75 | 0,50 | 0,54 | 39 | 3 | 14 |
| 1,5 | 0,85 | 0,57 | 0,55 | 42 | 5 | 16 |
| 1,5 | 0,95 | 0,63 | 0,56 | 45 | 7 | 18 |
| 1,5 | 1,05 | 0,70 | 0,58 | 48 | 9 | 21 |

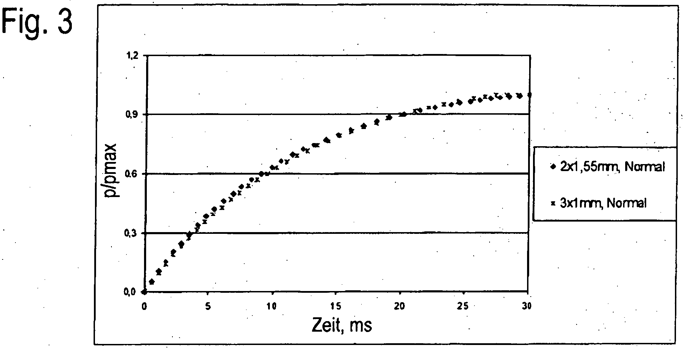

Figur 3 zeigt ein Diagramm mit einer beispielhaften Darstellung der Druck/Zeit-Kurven eines definierten Treibstoffes mit 36,7 Gew.-% Kaliumperchlorat, 60,8 Gew.-% Guanidinnitrat und 2,5 Gew.-% Additiven für unterschiedliche Tablettengrößen. Gegenübergestellt werden Tabletten mit Abmessungen von 3x1 mm und 2x1,55 mm. In diesem Beispiel vergrößert sich die relative Schüttdichte der Treibstofftabletten von ca. 0,46 auf etwa 0,59. Folglich kann eine Volumeneinsparung der Brennkammer von etwa 28 Prozent erzielt werden.

Das Beispiel zeigt, dass durch den Einsatz kleinerer Tabletten mit einem größeren Verhältnis von Höhe zu Durchmesser die veränderte Ballistik ausgeglichen und die gleiche Generatorleistung, gemessen als Gasmasse pro Zeit, erzielt werden kann.

Eine weitere Möglichkeit zur Verringerung des Brennkammervolumens besteht darin, dass zur Anpassung der ballistischen Leistung ein langsamer abbrennender Treibstoff eingesetzt wird. In diesem Fall können dann auch große Änderungen der Tablettengeometrie vorgenommen und beispielsweise Tabletten mit einem Durchmesser von 6 mm durch Tabletten mit einem Durchmesser von 2 mm ersetzt werden. Auf diese Weise lassen sich bei gleichbleibender ballistischer Leistung sehr große Einsparungen des Brennkammervolumens erzielen, wie in der obigen Tabelle gezeigt ist.

Die Herstellung der erfindungsgemäßen Treibstofftabletten kann nach den im Stand der Technik bekannten Verfahren durch trockenes Verpressen von pulverförmigen Treibstoffzusammensetzungen erfolgen, vorzugsweise auf an sich bekannten Rundlauftablettenpressen.

Die Erfinder haben jetzt gefunden, dass mit einer Optimierung der Verfahrensparameter auch Tabletten mit einem Durchmesser von ≤ 2 mm bis vorzugsweise etwa 0,8 mm hergestellt werden können.

Zur ausreichenden Füllung der Matrizen bei hoher Pressgeschwindigkeit wird zunächst ein Treibstoffpulver mit geeigneter Korngröße bereitgestellt. Die genaue Korngrößenverteilung ist abhängig von der Matrizengröße und vom Fließverhalten der jeweiligen Treibstoffzusammensetzung

Außerdem werden die Einrüttelparameter der Tablettenpresse so ausgelegt, dass ein schnelles Einfließen des Treibstoffpulvers in die Matrize gewährleistet ist.

Die erfindungsgemäßen Treibstofftabletten können in allen pyrotechnischen Rückhaltesystemen verwendet werden. Bevorzugt ist die Verwendung in Gasgeneratoren für Gassackmodule, Gurtstraffer, Mikrogasgeneratoren und Anzünder, insbesondere als Gas erzeugender Treibsatz und/oder als Verstärkerladung.

Weiter bevorzugt ist die Verwendung in einer Frühzündeinrichtung für Gasgeneratoren und/oder als direkt in den Gas erzeugenden Treibsatz integrierte Frühzündmischung.

## Patentansprüche

1. Treibstofftablette zur Verwendung in einer Sicherheitseinrichtung für Fahrzeuge, erhältlich durch trockenes Verpressen einer pulverförmigen Treibstoffzusammensetzung, mit einer im Wesentlichen zylindrischen Form, **dadurch gekennzeichnet, dass** die Treibstofftablette einen Durchmesser von höchstens 2 mm aufweist, und wobei die Treibstofftablette eine relative Schüttdichte von mindestens 0,5, definiert als Verhältnis von Schüttdichte der Treibstofftablette zu maximaler theoretischer Dichte der Treibstoffzusammensetzung, aufweist.

2. Treibstofftablette nach Anspruch 1, **dadurch gekennzeichnet, dass** die Treibstoffablette eine relative Schüttdichte von 0,5 bis 0,7, vorzugsweise 0,54 bis 0,6, aufweist.

3. Treibstofftablette nach einem der Ansprüche 1 oder 2, **dadurch gekennzeichnet, dass** die Treibstofftablette einen Durchmesser im Bereich von 1 bis 2 mm aufweist.

4. Treibstofftablette nach einem der Ansprüche 1 bis 3, **dadurch gekennzeichnet, dass** die Treibstofftablette ein Verhältnis von Höhe zu Durchmesser von 0,2 bis 0,8 aufweist.

5. Treibstofftablette nach einem der Ansprüche 1 bis 4, mit Abmessungen von Durchmesser x,Höhe im Bereich von 1,0 mm x 0,4 bis 2 mm x 1,5 mm, wobei das Verhältnis von Höhe zu Durchmesser höchstens 0,8 beträgt.

6. Treibstofftablette nach Anspruch 5, **dadurch gekennzeichnet, dass** die Abmessungen im Bereich von 1,5 mm x 0,4 - 0,9 mm liegen.

7. Treibstofftablette nach Anspruch 5, **dadurch gekennzeichnet, dass** die Abmessungen im Bereich von und 2 mm x 0,4 - 1,5 mm liegen.

8. Treibsatz, enthaltend eine Mehrzahl von Treibstofftabletten nach zumindest einem der voranstehenden Ansprüche 1 bis 7, insbesondere als Teil eines Anzünders, Gasgenerators und/oder Aktuators.

9. Anzünder (14) zur Verwendung in einer Sicherheitseinrichtung, mit einer Mehrzahl von Treibstofftabletten nach zumindest einem der voranstehenden Ansprüche 1 bis 7.

10. Gasgenerator (10) oder Aktuator zur Verwendung in einer Sicherheitseinrichtung für Fahrzeuge, mit einem Anzünder (14), wenigstens einer dem Anzünder zugeordneten Brennkammer (18) und einem in der Brennkammer (18) aufgenommenen Treibsatz (16) zur Erzeugung von Gas, wobei der Treibsatz in Form einer Schüttung von Treibstofftabletten vorliegt, **dadurch gekennzeichnet, dass** die Schüttung Treibstofftabletten gemäß einem der Ansprüche 1 bis 7 umfasst.

11. Gasgenerator (10) oder Aktuator nach Anspruch 10, **dadurch gekennzeichnet, dass** die Treibstofftabletten in der Schüttung in monomodaler Verteilung vorliegen.

12. Verwendung von Treibstofftabletten nach einem der Ansprüche 1 bis 7 als Verstärkerladung und/oder als Treibsatz eines Gasgenerators, Mikrogasgenerators oder Anzünders.

13. Verwendung von Treibstofftabletten nach einem der Ansprüche 1 bis 7 in einer Frühzündeinrichtung oder als direkt in einen Gasgeneratortreibstoff integrierte Frühzündmischung.

## Claims

1. A propellant pellet for use in a safety device for vehicles, obtainable by dry pressing of a powdery propellant composition, having a substantially cylindrical shape, **characterized in that** the propellant pellet has a diameter of 2 mm at the most, and the propellant pellet having a relative bulk density of at least 0.5, defined as the ratio of the bulk density of the propellant pellet to the maximum theoretical density of the propellant composition.

2. The propellant pellet according to claim 1, **characterized in that** the propellant pellet has a relative bulk density of from 0.5 to 0.7, preferably from 0.54 to 0.6.

3. The propellant pellet according to either of claims 1 or 2, **characterized in that** the propellant pellet has a diameter in the range of from 1 to 2 mm.

4. The propellant pellet according to any of claims 1 to 3, **characterized in that** the propellant pellet has a height-to-diameter ratio of from 0.2 to 0.8.

5. The propellant pellet according to any of claims 1 to 4, having dimensions of diameter × height in the range of from 1.0 mm × 0.4 to 2 mm × 1.5 mm, the height-to-diameter ratio amounting to a maximum of 0.8.

6. The propellant pellet according to claim 5, **characterized in that** the dimensions are in the range of from 1.5 mm × 0.4 - 0.9 mm.

7. The propellant pellet according to claim 5, **characterized in that** the dimensions are in the range of from 2 mm × 0.4 - 1.5 mm.

8. A propellant charge, containing a plurality of propellant pellets according to at least one of the preceding claims 1 to 7, in particular as part of an igniter, gas generator and/or actuator.

9. An igniter (14) for use in a safety device, comprising a plurality of propellant pellets according to at least one of the preceding claims 1 to 7.

10. A gas generator (10) or actuator for use in a safety device for vehicles, comprising an igniter (14), at least one combustion chamber (18) associated with the igniter, and a propellant charge (16) received in the combustion chamber (18) for generating gas, the propellant charge being provided in the form of a filling of propellant pellets, **characterized in that** the filling comprises propellant pellets according to any of claims 1 to 7.

11. The gas generator (10) or actuator according to claim 10, **characterized in that** the propellant pellets are present in the filling in a monomodal distribution.

12. Use of propellant pellets according to any of claims 1 to 7 as a booster charge and/or as a propellant charge of a gas generator, micro gas generator or igniter.

13. Use of propellant pellets according to any of claims 1 to 7 in an auto-ignition device or as an auto-ignition mixture directly integrated in a gas generator propellant.

## Revendications

1. Pastille de combustible pour l'utilisation dans un dispositif de sécurité pour véhicules, laquelle est apte à être obtenue par pressage à sec d'une composition de combustible poudreuse, présentant une forme sensiblement cylindrique, **caractérisée en ce que** la pastille de combustible présente un diamètre de 2 mm au maximum, la pastille de combustible définissant une masse volumique apparente relative d'au moins 0,5 en tant que rapport entre la masse volumique apparente de la pastille de combustible et la masse volumique théorique maximale de la composition de combustible.

2. Pastille de combustible selon la revendication 1, **caractérisée en ce que** la pastille de combustible présente une masse volumique apparente relative comprise entre 0,5 et 0,7, de préférence entre 0,54 et 0,6.

3. Pastille de combustible selon l'une des revendications 1 ou 2, **caractérisée en ce que** la pastille de combustible présente un diamètre dans une plage de 1 à 2 mm.

4. Pastille de combustible selon l'une des revendications 1 à 3, **caractérisée en ce que** la pastille de combustible présente un rapport hauteur-diamètre de 0,2 à 0,8.

5. Pastille de combustible selon l'une des revendications 1 à 4, présentant des dimensions de diamètre x hauteur dans une plage de 1,0 mm x 0,4 à 2 mm x 1,5 mm, le rapport hauteur-diamètre étant de 0,8 au maximum.

6. Pastille de combustible selon la revendication 5, **caractérisée en ce que** les dimensions sont dans une plage de 1,5 mm x 0,4 - 0,9 mm.

7. Pastille de combustible selon la revendication 5, **caractérisée en ce que** les dimensions sont dans une plage de 2 mm x 0,4 - 1,5 mm.

8. Charge propulsive, contenant une pluralité de pastilles de combustible selon au moins l'une des revendications précédentes 1 à 7, en particulier en tant que partie d'un allumeur, d'un générateur de gaz et/ou d'un actionneur.

9. Allumeur (14) pour l'utilisation dans un dispositif de sécurité, comportant une pluralité de pastilles de combustible selon au moins l'une des revendications précédentes 1 à 7.

10. Générateur de gaz (10) ou actionneur pour l'utilisation dans un dispositif de sécurité pour véhicules, comportant un allumeur (14), au moins une chambre de combustion (18) associée à l'allumeur et une charge propulsive (16) reçue dans la chambre de combustion (18) pour la génération de gaz, la charge propulsive étant prévue sous forme de pastilles de combustible en vrac, **caractérisé en ce que** la matière en vrac comprend des pastilles de combustible selon l'une des revendications 1 à 7.

11. Générateur de gaz (10) ou actionneur selon la revendication 10, **caractérisé en ce que** les pastilles de combustible dans la matière en vrac sont prévues selon une distribution monomodale.

12. Utilisation de pastilles de combustible selon l'une des revendications 1 à 7 sous forme de charge d'amplification et/ou de charge propulsive d'un générateur de gaz, d'un micro-générateur de gaz ou d'un allumeur.

13. Utilisation de pastilles de combustible selon l'une des revendications 1 à 7 dans un dispositif d'allumage automatique ou sous forme de mélange d'allumage automatique intégré directement dans un propulseur de générateur de gaz.
